(19) Europäisches Patentamt
European Patent Office
Office européen des brevets

(11) **EP 1 446 713 B1**

(12) **EUROPEAN PATENT SPECIFICATION**

(45) Date of publication and mention
of the grant of the patent:
**05.04.2006 Bulletin 2006/14**

(51) Int Cl.:
***G06F 7/50*** (2006.01)

(21) Application number: **02779811.5**

(86) International application number:
**PCT/IB2002/004568**

(22) Date of filing: **30.10.2002**

(87) International publication number:
**WO 2003/040859 (15.05.2003 Gazette 2003/20)**

(54) **HIGH-SPEED COMPUTATION IN ARITHMETIC LOGIC CIRCUIT**

HOCHGESCHWINDIGKEITSBERECHNUNG IN EINER ARITHMETIK- UND LOGIKSCHALTUNG

CALCUL A GRANDE VITESSE DANS CIRCUIT LOGIQUE ARITHMETIQUE

(84) Designated Contracting States:
**AT BE BG CH CY CZ DE DK EE ES FI FR GB GR IE IT LI LU MC NL PT SE SK TR**

(30) Priority: **08.11.2001 US 5551**

(43) Date of publication of application:
**18.08.2004 Bulletin 2004/34**

(73) Proprietor: **Koninklijke Philips Electronics, N.V.**
**5621 BA Eindhoven (NL)**

(72) Inventors:
• **DUTTA, Santanu**
**NL-5656 AA Eindhoven (NL)**
• **SINGH, Deepak**
**NL-5656 AA Eindhoven (NL)**

(74) Representative: **Roche, Denis**
**Philips Intellectual Property & Standards**
**156 Boulevard Haussmann**
**F-75008 Paris (FR)**

(56) References cited:
**EP-A- 0 214 836       EP-A- 0 955 576**
**US-A- 4 203 157       US-A- 5 504 698**

• **LYNCH T ET AL: "A SPANNING TREE CARRY LOOKAHEAD ADDER" , IEEE TRANSACTIONS ON COMPUTERS, IEEE INC. NEW YORK, US, VOL. 41, NR. 8, PAGE(S) 931-939 XP000298586 ISSN: 0018-9340 page 931, left-hand column -right-hand column, line 18**

**Description**

The present invention is directed to digital data processing, and more particularly, to reducing the processing time for complex datapath arithmetic computations in time-sensitive digital processing applications.

Arithmetic-logic data processing circuit have been designed for a wide range of applications and have been used in virtually every industry. Among many other, these applications include those implemented using programmed computer arrangements, discrete logic circuitry and semi-programmable logic components. For a variety of reasons, many of these applications have been directed to processing video data and have demanded completion of specified processing operations in minimal times. Some applications have further demanded a high-speed computing engine that can perform complex arithmetic computations in the same minimal time frame typically allocated for relatively simple arithmetic computations.

Video-data processing is one example of the many applications requiring relatively complex computations. Many of these video-data-processing applications require a signal processing circuit that is capable of performing increasingly-complex mathematical functions at ever-increasing speeds. Unfortunately, achieving high data-processing speeds and manipulating digital data according to more complex mathematical operations requiring time-consuming datapath arithmetic computations are opposing tensions.

Various video-data filters are used in specialized video signal processing techniques, such as compressing and decompressing video data in real time. Useful in some applications is a type of specialized video-data filter known as a "polyphase" filter. In video-processing applications, a polyphase filter is sometimes used to resize pixels by manipulating data stored to represent the horizontal and vertical lines used to refresh the display. In such applications, the ratio of the number of output pixels to the number of input pixels is defined as a zoom-factor; whereas, for general purpose filtering, the number of output pixels equals the number of input pixels. The resizing operation is also known as expansion or up-sampling when the zoom factor is greater than one; otherwise, resizing operation is typically known as compression or down-sampling. Normally, for resizing a picture (scaling up or down) to provide a fixed zoom, the polyphase filter is implemented with its coefficients defined as a function of the position or phase of the pixel that is being processed.

For resizing in high-precision video applications, the polyphase filtering is implemented with a more unique architecture to accommodate the math required to achieve the precision; typically, this type of polyphase filtering is implemented in a form referred to as "polyphase-transposed" filtering. For the more typical video applications, the polyphase filtering is implemented as a polyphase direct filter using a computational architecture that is more common with general purpose filtering such as finite-impulse-response (FIR) filtering. However, using custom logic circuits to process datapath arithmetic computations at a requisite speed is time-consuming, and costly, to implement and verify. There is a significant cost in connection with designing, manufacturing and maintaining the integrated circuits used to provide such functionality. Using conventional or library logic circuits is easier to implement and verify, thus less costly, but do not achieve the necessary operational speed when used in an straight-forward "off the-shelf" operation.

The requisite math associated with data processing filters is typically accomplished through a series of basic arithmetic operations. The series of computations is repeated for each pixel of a video display. The length of a pipeline stage in a computational datapath design is usually determined by the maximum number of arithmetic operations that can be achieved within a targeted clock cycle, the targeted clock cycle being determined from a the number of pixels that must be processed per unit of real time to support the video display. Efficiencies in the underlying repetitive elementary arithmetical computations that implement the higher-order mathematical operations are compounded through repetition into significant overall processing improvements.

Accordingly, there is a well-recognized need to develop a video-processing filter architectures using conventional or library functional blocks arranged to increase data-processing throughput and complete datapath computations within a targeted clock cycle.

The present invention is directed to a digital filter circuit arrangement that addresses the above-mentioned challenges and that reduces the time otherwise required for implementing arithmetic computations, which are integral to filtering operations. The present invention is exemplified in a number of implementations and applications, some of which are summarized below.

According to one aspect, the present invention is directed to a digital filter circuit arrangement as claimed in claim 1.

The present invention is believed to be applicable to a variety of different types of filtering applications, and has been found to be particularly useful for video filtering applications and other applications benefiting from a digital filter circuit arrangement that can add and subtract relatively large binary numbers in a relatively fast period of time. In more specific embodiments, the present invention can be implemented as part of a pixel-data digital filter using for various filtering applications such as scaling and polyphase filtering.

It should be noted that US patent 5,504,698 describes a dual function adder circuit. The dual function adder circuit generates a branch address on the basis of a current program counter and an m-bit offset word during address branch instruction operation. Additionally, the dual function adder circuit generates a next program counter as a next execution address by incrementing the current program counter. The dual function adder circuit comprises an m-bit full adder, a (n-m) bit incrementer, a (n-m) bit decrementer, and an adder select logic circuit. The adder select logic circuit receives an adder carryout bit from the m-bit full adder and a bit<15> of the m-bit offset word to control an operation of the adder select logic to generate either an increment operation, an decrement operation, or a bypass operation.

Other aspects and advantages are directed to specific example embodiments of the present invention.

The above summary of the present invention is not intended to describe each illustrated embodiment or every implementation of the present invention. The figures and detailed description that follow more particularly exemplify these embodiments.

The invention may be more completely understood in consideration of the detailed description of various embodiments of the invention, which follows in connection with the accompanying drawings. These drawings include:

Fig. 1 illustrates a general block diagram of an example data-processing circuit, according to the present invention.
Fig. 2 illustrates a general block diagram of an example functional datapath unit for a reconfigurable digital filter, according to the present invention.
Fig. 3 illustrates an example data manipulation flow diagram through a datapath for a zoom computation of a polyphase direct filter operating in a panoramic mode, according to the present invention.
Fig. 4 illustrates a block diagram of selection logic for accelerating a 24-bit addition computation within a digital filter, according to the present invention.
Fig. 5A illustrates a block diagram of selection logic for accelerating a 25-bit addition computation within a digital filter, according to the present invention.
Fig. 5B illustrates a block diagram of selection logic for determining an intermediate carryout within a 25-bit addition computation of a digital filter, according to the present invention.
Fig. 5C illustrates a block diagram of selection logic for accelerating a 4-bit addition computation within a digital filter, according to the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

The present invention is believed to be applicable to a variety of different types of filtering applications, and has been found to be particularly useful for video filtering applications and other applications benefiting from a data processing circuit that can add and subtract relatively large binary numbers in a relatively fast period of time. Various aspects of the invention may be appreciated through a discussion of examples using these applications.

Arithmetic computations involving lengthy binary numbers can require multiple clock cycles to produce a result. According to one example general circuit arrangement of the present invention, binary number arithmetic is implemented as a combination of arithmetic operations upon a portion of each binary number and logical operations involving further portions of the input binary numbers. By reducing the period of time, required to perform such arithmetic computations, e.g., from a plurality of clock cycles to a single clock cycle, data throughput is significantly improved. Alternatively, computation quantities are increased per unit clock period, without sacrificing throughput.

According to a first general embodiment of the present invention, a circuit arrangement is adapted to add a first binary operand of N bits and a second binary operand of M bits, N being greater than or equal to M. The circuit arrangement includes an adder coupled to a multiplexer circuit. A representative set of least-significant bits of the first and second binary operands are added together to produce a least-significant bits partial sum and a carryout. A logic circuit, such as a 4-1 demultiplexer circuit or other similarly-functioning data-passing circuit, is arranged to produce, as an output, a most-significant bits partial sum by passing either a representative set of most-significant bits of the first binary operand, or an offset of the representative set of most-significant bits of the first binary operand. The data-passing circuit is responsive to selection data, the selection data being a function of the most-significant bit of the representative set of least-significant bits of the first binary operand. The circuit arrangement can include an M-bit adder, and the multiplexer circuit can be implemented such that it selects a N minus M (N-M) most-significant bits partial sum responsive to the M-bit adder carryout and the Mth bit of the first operand.

Other aspects of the present invention involve variations of the above approach. According to one such aspect, each operand includes a sign bit as its respective most-significant bit, and the multiplexer circuit is configured to select either the N-M most significant bits of the first operand, the N-M most significant bits of the first operand incremented by one, or the N-M most significant bits of the first operand decremented by one. According to another aspect, the operands are unsigned, N-M=1, and the multiplexer circuit is implemented using a logic circuit such as an XOR gate.

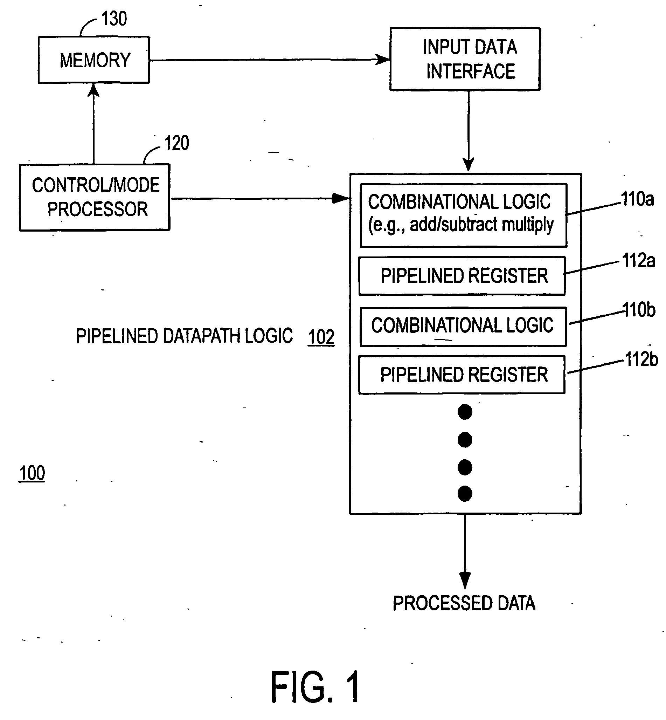

Another important aspect and application of the present invention is illustrated in Fig. 1 by way of a digital filtering circuit 100. The datapath unit 102 is a pipelined cascade of combinational logic circuits 110a, 110b, and including arithmetic operations such as additions, subtractions, multiplications, and/or logical operations such as AND, OR, NOT, MULTIPLEX, SHIFT. After each combinational logic circuit, a pipelined register 112a, 112b, etc. is used to feed the result of the previously-executing combinational logic circuit to the next combinational logic circuit. The datapath 102 is controlled by the control/mode processor 120 with data being fed through memory 130 for processing by the pipelined datapath unit 102 and sent out. The speed of operations depends, among many things including, for example, the clock cycle time, and the clock cycle time, in turn is dependent on the amount of logic between any two pipeline stages. The smaller the amount of logic between the pipeline registers, the faster can the clock can be, thereby improving throughput. However, spreading the logic too thin will lead to a large number of pipe stages where the initial latency will be quite long.

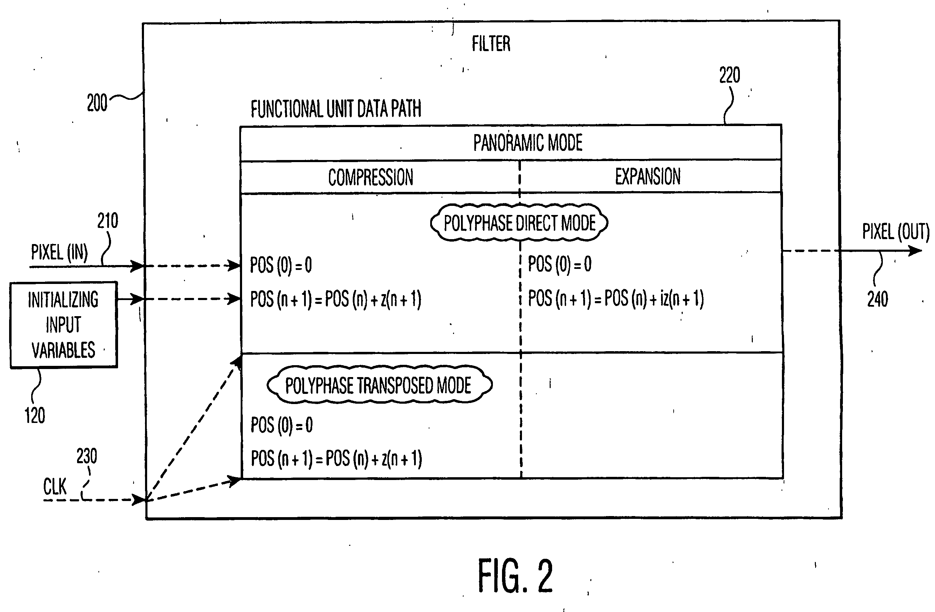

In one particular example application, Fig. 2 illustrates one example application of the present invention, a horizontal filter 200 for a media processor chip used to perform complex mathematical scaling calculations in implementing panoramic image zoom functionality. A zoom factor determines how a video picture is being scaled. A zoom value less than one is indicative of image compression, and a zoom value greater than one is indicative of image expansion. To re-scale a video image, an algorithm is used to determine at precise times, whether an output pixel of the video image should be produced, the output pixel having certain characteristics.

Video filter 200 operating in a polyphase direct filtering mode is used for either compression or expansion of video images. In a compression mode, the filter continuously consumes (*e.g.*, shifts-in, multiplies with appropriate filter equation coefficients, and accumulates) each of a sequence of input pixels from a pixel input path 210, according to a repetitive clock cycle. Production of an output pixel is determined according to evaluation of a particular "condition," the condition being evaluated through a series of computations within a functional unit datapath 220. Evaluation of the "condition" is dependent on the mode of filtering, and whether compression or expansion of the video image is required. From evaluation of the "condition," output pixels are periodically produced along a pixel output path 240. "Condition" evaluation occurs each clock cycle, a clock signal being received at the filter via clock path 230. Scaling operations are defined by scaling parameters, the scaling parameters defined initial scaling variable settings input to the filter from memory 120 via the input data interface 122.

A input pixel position pointer, "pos(n)," is updated once per input pixel to track the present location of video image processing with respect to the input image. According to one example implementation, expressions defining pos(n) during compression operations are as follows:

- $pos(0) = 0$; and
- $pos(n+1) = pos(n) + z(n+1) = z(1) + z(2) + ... + z(n+1)$,

where $z(n)$ is the zoom factor at pixel $x(n)$. The present pixel position is the last pixel position modified by the present zoom factor. The variable pos(n) represents the pixel location of$x(n)$ with respect to the output pixels. Pixel $x(n)$ is located between $y(floor(pos(n)))$ and $y(ceil(pos(n)))$.

In an expansion mode, the filter produces more output pixels than it consumes, however production of an output pixel is similarly determined according to evaluation of a particular "condition." In expansion mode, pixel position pointer, "pos(n)," tracks the present location of video image processing with respect to output pixel production. Expressions defining pos(n) use, in case of a direct polyphase filter, an inverse zoom value in determining the relationship between consumed input pixels and output pixels produced. The pointer variable, pos(n), is updated once per output pixel as follows:

- $pos(0) = 0$; and
- $pos(n+1) = pos(n) + iz(n+1) = iz(1) + iz(2) + ... + iz(n+1)$,

where $iz(n)$ is the inverse of the zoom factor at pixel $y(n)$. The present pixel position is the last pixel position modified by the present inverse'zoom factor. The variable pos(n) represents the pixel location of $y(n)$ with respect to the input pixels. Pixel $y(n)$ is located between $x(floor(pos(n)))$ and $x(ceil(pos(n)))$.

To implement a uniform zoom function, the zoom value is constant. For example, a uniform compression is implemented through a constant $z(n)$, and a uniform expansion is achieved through a constant $iz(n)$. Zoom values, $z(n)$ and $iz(n)$ are not constant where zoom is variable. Panoramic zoom, used only in a polyphase direct filtering mode, is implemented through a continuously-varying $iz(n)$. The inverse zoom value is made variable according to a second-order polynomial in one example implementation, the polynomial coefficients being programmed into control registers.

The "condition" which is evaluated to determine output pixel production, is derived from the function pos(n). The function pos(n), includes an integer portion and a fractional portion in one example implementation. The "condition" is related to changes made to the integer portion of pos(n).

Evaluation of the above-mentioned "condition," dependent on the zoom value, is typically a processing speed bottleneck for scaling filter functionality, precise arithmetic over long bit widths being performed in evaluation of pos(n), and ultimately, the "condition." The processing workload is even greater, and thus more costly in terms of time, where zoom value is made variable, as is the case in a panorama zoom mode for example, since the zoom variable changes continuously with each clock cycle.

It is desirable from an efficiency standpoint to evaluate the "condition" at each clock cycle. Extending a particularly complex "condition" computation, or a lengthy series of computations comprising a "condition" evaluation, over multiple clock cycles does not cause any error in the "condition" calculation itself. However, other filter hardware is thereby routinely left idle *i.e.,* not performing meaningful operations, while waiting for the extended "condition" evaluation computations to be completed. These delays at each pixel severely limit pixel processing speeds, and indirectly, an ability to support higher pixel densities in real time.

The polyphase direct filter operating in panoramic mode has input parameters, defined as follows:

(a) HSRC_ZOOM is the inverse of the zoom value, or iz. HSRC_ZOOM id a 16-bit unsigned input quantity, the most significant 4 bits represent an integer portion, and the least significant 12 bits represent a fractional portion. HSRC_ZOOM is specified to determine how the input image is scaled. The most significant 6 bits of the 12 bits which represent the fractional portion determine phase, and therefore, the set of filtering coefficients.

(b) HSRC_DZOOM is a signed 16-bit input value, and a portion of the second-order polynomial describing how the zoom continuously varies in panoramic mode.

(c) HSRC_DDZOOM is an unsigned 8-bit input value, and another portion of the second-order polynomial describing how the zoom continuously varies in panoramic mode.

The "condition" is evaluated in each clock cycle, the "condition" being derived from a cascade of intermediate zoom variable calculations. The intermediate zoom variables are initialized at the beginning of scaling operations using the above-mentioned input parameters as follows:

- zoom[23:0] <- {8{0}, HSRC_ ZOOM[15:0]};
- dzoom[15:0] <-HSRC_DZOOM[15:0];
- ddzoom[7:0] <- HSRC_DDZOOM[7:0]; and
- pos[24:0] <- 0.

The notation used herein is the binary number variable name, followed by the most significant bit place, and the least significant bit place in square brackets separated by a colon. The binary variable name followed by a single squared-bracketed number, N, denotes the Nth bit of the named binary variable, for example, dzoom[15] denotes the 15$^{th}$ bit of the binary variable dzoom. The notation "{x,y}" denotes a concatenation operation of the first bracketed binary value, x, with the second bracketed value, y. The notation "8 {x}" denotes a concatenation of eight x's, for example, 8{0} denotes the binary number, 00000000. The variable pos[x:y] is the pixel position counter, having an integer portion and a fractional portion, bits [24:20] being the integer portion and bits [ 19:0] being the fractional portion.

Each clock cycle after initialization, a calculation is done to update the above-mentioned variables, along with the "condition" variable, sval[x:y]. The variables thereby are expressed as functions of time, as follows:

- dzoom[15:0](t) = dzoom[15:0](t-1) - {8{0}, ddzoom[7:0]};
- zoom[23:0](t) = zoom[23:0](t-1) + {8{dzoom[15]}, dzoom[15:0]}(t);
- pos[24:0](t) = pos[24:0](t-1) + {{0}, zoom[23:0]}(t); and
- sval[4:0](t) = pos[24:20](t) - pos[24:20](t-1).

The variable pos[x:y] keeps track of the phase at the current position of the pixel. Recall, pos[x:y] includes, from most significant to least significant, one sign bit, four integer-representative bit, and the balance of the bits designating a fractional portion. As pos[x:y] is evaluated each clock cycle, the variable sval[4:0] determines the "condition," equal to the value of sval[4:0], the "condition" being changes to the integer portion of pos[x:y]. The "condition" (the value of sval [4:0]) subsequently determines the when output pixels are produced with respect to input pixels consumed.

The above-mentioned four variable computations are integral to filtering operations, to be completed each clock cycle. Together, the equations involve a significant number of arithmetic computations to be completed in a single clock cycle, if the clock cycle is not large. In one example implementation of the present invention, a circuit arrangement is configured to reduce the solution time for above-mentioned set of filtering computations in order to minimize overall computation time.

The above-mentioned time-dependant variable functions can be expressed for time "t" as follows:

- Eqn A: dzoomn[15:0] = dzoom[15:0] - {8 {0}, ddzoom[7:0]};
- Eqn B: zoomn[23:0] = zoom[23:0] + {8{dzoomn[15]}, dzoomn[15:0]};
- Eqn C: posn[24:0] = pos[24:0] + {{0}, zoomn[23:0]}; and

- Eqn D: sval[4:0] = posn[24:20] - pos[24:20].

The designator "n" appended to a variable name denotes "new," or the variable value of the present clock cycle (*i.e.,* the variable value at time "t"), and a variable without the "n" appended denotes the variable value determined as of the previous, or last, clock cycle.

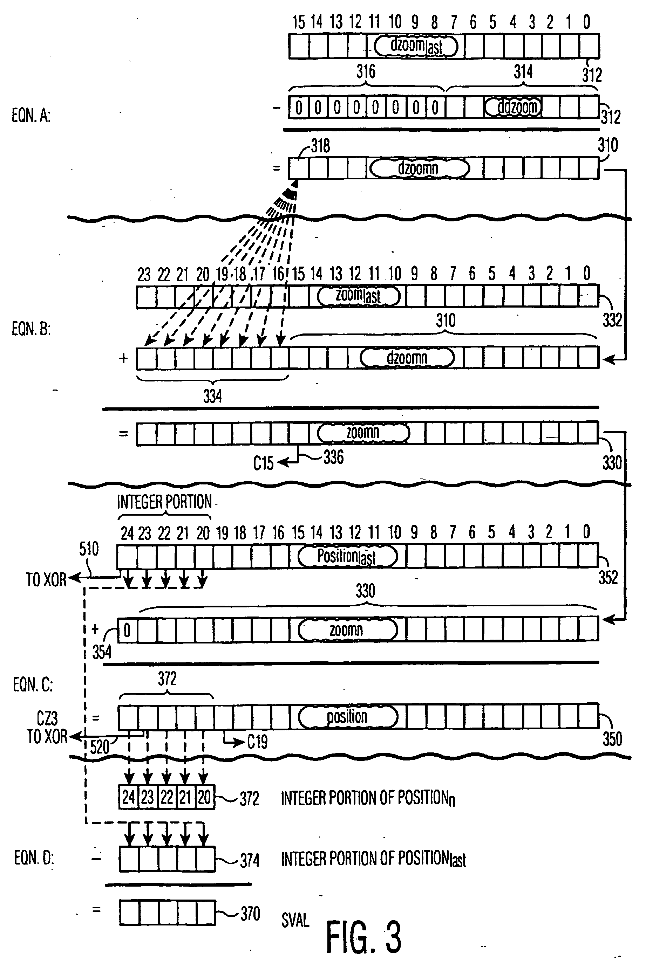

The bit manipulations represented by equations A-D above are illustrated in Fig. 3. For equation A, the new binary value of dzoom 310 at time "t" (*i.e.,* dzoomn) equals the last value of dzoom (*i.e.,* the value at the previous, or "last," clock cycle) 312 minus the present value of the ddzoom variable 314 concatenated with eight more significant zero bits 316. For equation B, the new binary value of zoom 330 at time "t" (*i.e.,* zoomn) equals the last value of zoom (*i.e.,* the value at the previous, or "last," clock cycle) 332 plus the present value of the dzoom variable 310 concatenated with eight more significant bits 334, each having a value equal to the most significant bit of the new dzoom variable (*i.e.,* bit number 15 of dzoomn, or dzoomn[15]). Therefore, dzoomn is concatenated with either eight preceding 1's, or eight preceding 0's. For equation C, the new binary value of the position counter, pos(ition) 350 at time "t" (*i.e.,* position) equals the last value of position (*i.e.,* the value at the previous, or "last," clock cycle) 352 minus the present value of the zoom variable 330 concatenated with a zero most significant bit 354. And finally, for equation D, the new binary value of the "condition" sval 370 at time "t" equals the integer portion of present value of the position variable 372 (*i.e.,* the value at the previous, or "last," clock cycle), bits 20-24, minus the last value of the integer portion of the position variable (*i.e.,* position, bits 20-24) 374.

As is apparent, evaluation of the "condition" variable, sval[4:0] is the last of a cascading series of binary arithmetic computations. Straight-forward calculation of each equation through conventional binary functional operators, for example using a 24-bit adder to compute equation B, followed by using a non-standard 25-bit adder to compute equation C, and a subsequent 4-bit adder to compute the "condition" value, is not efficient in terms of time. Either a multi-clock cycle computation or a single clock cycle of sufficient duration would be required.

According to one aspect of the present invention, lengthy binary variables are broken apart into portions, the portions being manipulated to increase computational speed. Equation A is evaluated using a 16-bit binary adder to compute the new value of dzoom (*i.e.,* dzoomn). Computation of equation B is broken apart at the 15$^{th}$ bit and separately evaluated in two portions which are subsequently concatenated.. The result of equation B, zoom[23:0] is alternatively expressed in equation B1 as the concatenation of bits resulting from the above-mentioned separate operations, as follows:

$$\text{Eqn B1: zoomn[23:0]} = \{\text{zoomn[23:16], zoomn[15:0]}\}$$

Each portion of the concatenation above is evaluated separately; however, evaluation of zoomn[23:16] has to account for the carryout, C 15, resulting from evaluation of zoomn[15:0]. Carryout, C15, is indicated in Fig. 3 at 366 is the carryout from determining the value of zoomn[15], or more completely, the carryout from determination of zoomn[15:0]. Carryout C15 is derived, in one example implementation, from a 16-bit adder (not shown), having inputs of zoom[15:0] and dzoom[15:0]. Using the adder carryout adds to the speed of the present invention, since the adder carryout is available for further use (in a logic circuit described further below) several gate delays prior to the adder's sum being stabilized and available. Therefore, using equation B:

$$\{\text{C15, zoomn[15:0]}\} = \text{zoom[15:0]} + \text{dzoomn[15:0]}$$

Substituting for zoomn[15:0] using equation A, and simplifying:

$$\{\text{C15, zoomn[15:0]}\} = \text{zoom[15:0]} + (\text{dzoom[15:0]} - \{8\{0\}, \text{ddzoom[7:0]}\})$$

The variable ddzoom is not updated with each clock cycle, and therefore remains constant, equal to its initializing value. The above equation can be expressed as follows (Equation B2):

$$\{C15, zoomn[15:0]\} = zoom[15:0] + dzoom[15:0] - \{8\{0\}, HSRC\_DDZOOM\}$$

Using equation B, the first portion of the concatenation of equation B1 can be expressed as follows (Equation B3):

$$zoomn[23:16] = zoom[23:16] + 8\{dzoomn[15]\} + C15$$

where the binary term "{8{dzoomn[15]}}" is a concatenation of either eight 1's or eight 0's, dependant on the value of dzoomn[15]. This property is alternatively expressed as (Equation D1):

$$8\{dzoomn[15]\} = dzoomn[15] \ ? \ 11111111 : 00000000$$
$$= dzoomn[15] \ ? \ 8'hff : 8'b0$$

where "8'hff" is an eight digit binary number for "ff" hexadecimal, and "8'b0" is an eight digit binary zero. Recognizing that for any N-bit number A (Equation D2):

$$A + 11111111 = A + 8'hff = A-1$$

and (Equation D3):

$$A + 00000000 = A + 8'b0 = A$$

therefore, making substitutions using equations D1-D3, equation B3 can be express as follows (Equation B4)

$$zoomn[23:16] \quad = zoom[23:16] + (dzoomn[15] \ ? \ 8'hff : 8'b0) + C15$$

$$= (dzoomn[15] \ ? \ zoom[23:16] : zoom[23:16] - 1) + C15$$

$$= dzoomn[15] \ ? \ (C15 \ ? \ zoom[23:16] : zoom[23:16] - 1)$$

$$(C15 \ ? \ zoom[23:16] +1 : zoom[23:16])$$

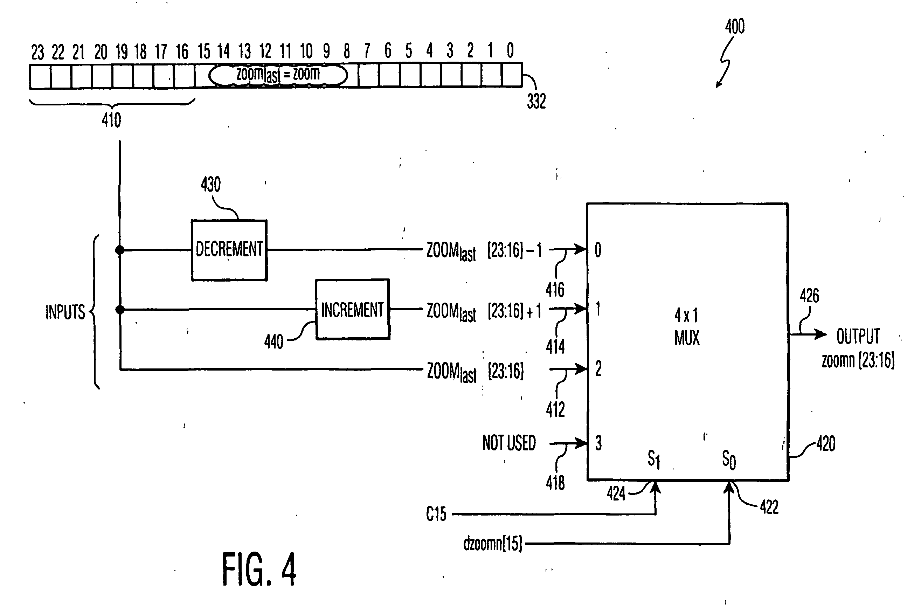

Fig. 4 illustrates one example of a circuit arrangement 400 implementing equation B4 above. The upper eight bits of the new "zoom" variable are selected to be one of zoom[23:16], zoom[23:16] + 1, or zoom[23:16] - 1, dependant on the respective values for C15 and dzoomn[15]. Each of the possible selections is derived from the previous value of the "zoom" variable. The previous "zoom" from Fig. 3 is indicated in Fig. 4 at 332. The upper eight bits of the previous "zoom" variable *(i.e.,* zoom[23:16]) 410 is directed into a 4x1 (note that one-hot coding is not at all necessary and so, let us not talk about it) multiplexer ("mux") 420 as one selectable input 412. Zoom[23:16] is further directed through decrementer 430 and incrementer 440 to easily and quickly implement zoom[23:16] - 1 and zoom[23:16] + 1 respectively. The output of incrementer 440 is zoom[23:16] + 1, which is directed into mux 420 as another selectable input 414. The output of decrementer 430 is zoom[23:16]- 1, which is directed into mux 420 as a third selectable input 416 as shown. The incrementing and decrementing functions are time-efficiently done in parallel as shown. A forth input 418 to mux 420 is not used in the present implementation. The sixteenth bit of the already available present dzoom (*i.e.*, dzoomn [15]) is used as a first mux select 422 and carryout C15 is used as a second mux select 424. The output 426 of mux 420 is the present value of the upper eight bits of "zoom" (*i.e.*, zoomn[23:16]). The following table shows the selection logic for circuit arrangement 400:

**zoomn[23:16]**

| $S_1$ (C15) | $S_0$ (dzoomn[15]) | Input$_2$ (zoom[23:16]) | Input$_1$ (zoom[23:16]+1) | Input$_0$ (zoom[23:16]-1) |
|---|---|---|---|---|
| 0 | 0 | 1 | 0 | 0 |
| 0 | 1 | 0 | 0 | 1 |
| 1 | 0 | 0 | 1 | 0 |
| 1 | 1 | 1 | 0 | 0 |

According to the example implementation of the present invention described above, a 24-bit binary addition (Equation B) is accomplished by:

(a) breaking apart the operands;
(b) adding the lesser significant bit portion of each addend using a 16-bit adder;
(c) subsequently using an carryout (available before the sum stabilizes) from the 16-bit adder, along with the most significant bit of one of the adder operands, as selection logic of a multiplexer-based selection, to select either the more significant bit portion of the longer original operand, or an offset thereof (*e.g.*, an 8-bit addition/subtraction thereto where one of the operands is 1).

The above-described method and circuit arrangement is generally applicable to addition of an N-bit binary operand and an M-bit binary operand, where N is greater than or equal to M. The most-significant bit of each operand is a sign bit. The M-bit binary operand is "extended" in length, by replicating the most significant (sign) bit until the "extended" operand has a length ofN. The operands are split into two portions, the lesser significant M bits, and the more significant N-M bits. A M-bit adder is used to add the lesser significant portions. The carryout from the M-bit addition is used, along with the Mth bit of the original N-bit operand, is used to select, using a logic circuit (*e.g.*, a 4x1 multiplexer), the most significant N-M bits as being one of:

• the N-M most significant bits of the original N-bit operand; ,
• the N-M most significant bits of the original N-bit operand plus 1; or
• the N-M most significant bits of the original N-bit operand minus 1.

The incremented and decremented selections are derived via an N-M bit adder/subtracter where one operand is the N-M most significant bits of the original N-bit operand, and the other operand is 1. The results derived from the logic circuit are concatenated as the most significant bits to the results of the M-bit addition.

According to another, more specific, example implementation of the present invention, the operands are of the same length (N); however, at least one of the operands includes, as its most-significant bits, a plurality of identical sign extension bits. The operands are each "split" at the same bit position into least- and most-significant portions such that an M-bit least-significant portion of one of the operands include one sign bit, and the (N-M)-bit most-significant portion of the same operand includes only the sign extension bits. Thereafter, the least- and most-significant portions are manipulated as described above. The method of the present specific example implementation of the invention is generally applicable where one operand can be split such that all the bits of its most-significant bits portion are all identical.

According to another example embodiment of a circuit arrangement of the present invention, an N-bit binary operand and an M-bit binary operand are to be added. The operands are unsigned binary numbers. The addends are split at the same bit position into least- and most-significant bit portions. The least-significant bit portions are added using an adder to determine a least-significant bits partial sum. The most-significant bit portions are processed using a logic circuit to select a most-significant bits partial sum, which is done in less time than it would take to use an adder to sum the most-significant bits portions of each addend. In one example application of the present invention, a logic circuit (*e.g.*, a multiplexer, an XOR gate, or a multiplexing circuit implementing XOR logic) selects the most-significant bits partial sum responsive to selection data. The logic circuit selects one of a plurality of pre-determined partial sums, each of the possible selections being pre-determined from known characteristics of at least one of the addends, for example, where at least one of the most-significant bit portions of the addends is all 1's or all 0's, a set of possible selections can be predetermined as a function of the other most-significant bit portion of the other addend.

In another example embodiment of a circuit arrangement of the present invention, an N-bit binary operand and an M-bit binary operand are to be added, where N-M is one. The operands are unsigned binary numbers. The M-bit binary operand is "extended" in length, prepending a zero-valued (*e.g.*, "0") most significant bit. The operands are split into two portions, the lesser significant M bits, and the more significant N-M bits. A M-bit adder is used to add the lesser significant portions. A carryout from the M-bit addition is used, along with the Mth bit of the original N-bit operand, is used to select, using a logic circuit (*e.g.*, an XOR gate, or a multiplexer implementing an XOR function), the most significant bit as being one of the N-bit addition.

According to another example embodiment of a circuit arrangement of the present invention, an N-bit binary operand and an M-bit binary operand are to be added, where N-M is one. The operands are unsigned binary numbers. The M-bit binary operand is "extended" in length, prepending a non-zero-valued (*e.g.*, "1") most significant bit. The operands are split into two portions, the lesser significant M bits, and the more significant N-M bits. A M-bit adder is used to add the lesser significant portions. An inverted carryout from the M-bit addition is used, along with the Mth bit of the original N-bit operand, is used to select, using a logic circuit (*e.g.*, an XOR gate, or a multiplexer implementing an XOR function), the most significant bit as being one of the N-bit addition.

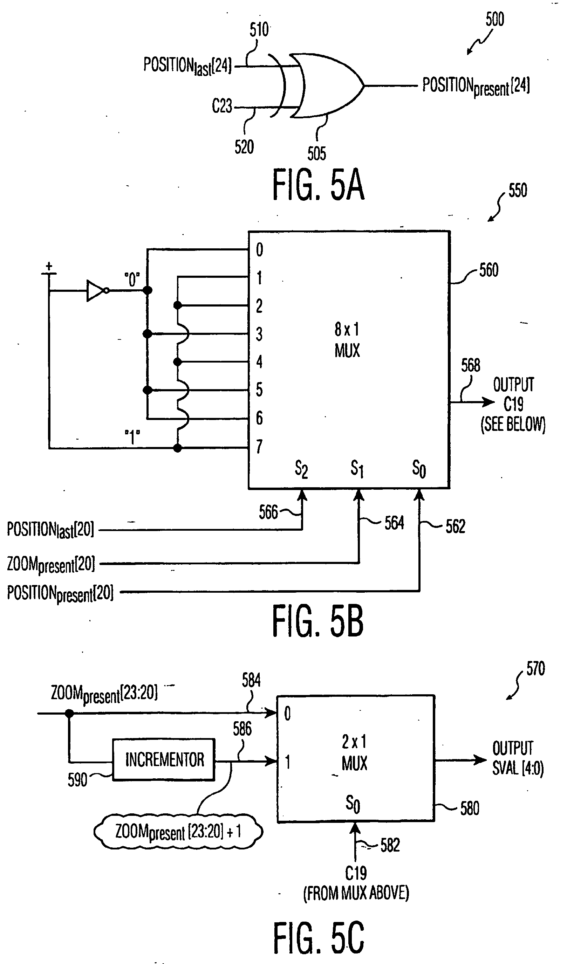

According to one example application, a 25-bit addition of the unsigned operands according to equation C (above) is implemented, in part, by the circuit arrangement 500 of Fig. 5A. Equation C is expressed as follows:

$$posn[24:0] = pos[24:0] + \{\{0\}, zoomn[23:0]\}$$

Using a 25-bit adder to repetitively compute the 25-bit position variable is expensive since 25-bit addition is typically a non-standard function. Again, the operands are split into two portions, each portion being evaluated separately. A least-significant bits portion of each operand are added together to produce a least-significant bits partial sum using an adder having a carryout path faster than a sum path. A logic circuit 505 is used to select a most-significant bits partial sum, the selection being either a most-significant bits portion of one of the operands, or an offset thereof, as a function of a carryout from the adder. An XOR logic circuit is used in implementing equation C.

Adders having a width which is a multiple of eight are readily available library functions, for example, a 24-bit adder. Equation C is expressed as follows when split for evaluation at the 24-th bit:

$$posn[24:0] = posn[24] + posn[23:0]$$

where computation of posn[23:0] via an adder also generates a carryout, C23. Therefore from equation C (Equation C1):

$$\{C23, posn[23:0]\} = pos[23:0] + zoomn[23:0]$$

and (Equation C2):

$$posn[24] = pos[24] \wedge C23$$

where the ^ operator denotes a logical XOR operation using the already-available 25th bit of the last computation of the position variable 510 and the carryout, C23, 520 of a 24-bit addition to determine a 24-bit least-significant bits partial sum. Fig. 3 illustrates the respective source for these selection data portions. The carryout, C23, is available from the 24-bit adder via an optimized carry path, approximately 2 gate delays before the sum quantity stabilizes enough for further use.

The final equation, equation D, for the digital filtering example application is:

$$sval[4:0] = posn[24:20] - pos[24:20]$$

Form equation C, posn[24:20] can be expressed as follows (Equation E1):

$$posn[24:20] = pos[24:20] + \{0, zoomn[23:20]\} + C19$$

where C19 (which is **not available from a standard library adder**) is generated from adding single bits zoomn[19] and posn[19].

Substituting equation E1 into equation D yields:

$$sval[4:0] = (pos[24:20] + \{0, zoomn[23:20]\} + C19) - pos[24:20]$$
$$= zoomn[23:20] + C19$$
$$= C19 \text{ ? } zoomn[23:20] + 1 : zoomn[23:20]$$

The "condition" variable sval[4:0] is either zoomn[23:20] + 1, or zoomn[23:20] dependant on the value of C19. Since zoomn[23:20] is already available, being the 4 most-significant bits of the result of equation B, selection of zoomn[23:20] or an increment thereof (pre-computed using zoomn[23:20] through an incrementer or 4-bit adder where the other operand is 1) turns on the value of intermediate carry, C19.

Intermediate carry, C 19, may not be readily available from a typical 24-bit adder that does not externally bring out intermediate carries. For any two-operand binary addition, the sum's Mth bit is equal to the sum of the first operand's Mth bit, plus the second operand's Mth bit, plus any carry generated in computing the sum's lesser-significant bits. For example, from equation C (Equation E2):

$$posn[20] = pos[20] + zoomn[20] + C19$$

The carry, C19, may therefore be "reverse-engineered" from the following table used to determine the value of posn[20] for particular values of the other three variables according to equation E2:

| C19 | pos[20] | Zoomn[20] | posn[20] |
|-----|---------|-----------|----------|
| 0 | 0 | 0 | 0 |
| 0 | 0 | 1 | 1 |
| 0 | 1 | 0 | 1 |
| 0 | 1 | 1 | 0 |
| 1 | 0 | 0 | 1 |
| 1 | 0 | 1 | 0 |
| 1 | 1 | 0 | 0 |
| 1 | 1 | 1 | 1 |

From the table.above, it is evident that (Equation E3):

$$C19 = pos[20] \wedge zoomn[20] \wedge posn[20]$$

Fig. 5B illustrates one example circuit arrangement 550 implementing of equation E3. An 8x1 mux 560 includes three select terminals. The first select terminal 562 receives pos[20], the second select terminal 564 receives zoomn[20], and the third select terminal 566 receives posn[20]. Mux inputs1 , 2, 4, and 7 are tied to a logical "1," and mux inputs 0, 3, 5, and 6 are tied to a logical "0" as shown. The mux output terminal 568 generates C19 according to the table above.

Fig. 5C illustrates one example circuit arrangement 570 implementing selection logic responsive to C19. Circuit arrangement 570 includes a 2x1 mux 580 having a single select input terminal 582 for receiving C19 from mux 560 of Fig. 5B. Mux 580 selects either zoomn[23:20] directed to a first input terminal 584, or an offset thereof (e.g., zoomn[23: 20] + 1) directed to a second input terminal 586. The offset is derived from an incrementer 590 operating on zoomn[23: 20]. In an alternative example circuit arrangement, circuit arrangements 550 and 570 are combined into a single multiplexer circuit adapted to receive a first input signal being zoomn[23:20], and a second input signal being an offset of zoomn[23:20], for example zoomn[23:20] +1. One of the inputs are selected using the select logic of circuit arrangement 550.

Therefore, the 4-bit addition to compute equation D is solvable prior to completion of a solution to equation C. The value of zoomn[23:20] is available after completion of equation B, and the value of posn[20] is an intermediate value derived in computing equation C by the method described above. Even though the latest arriving signal (posn[20] at the multiplexer select logic is derived from a previous equation, the posn[20] signal is available earlier than the complete result for the previous equation.

Accordingly, various embodiments of the present invention can be realized to provide faster addition for a series of signed and unsigned binary arithmetic executed, for example in video signal processing, cryptography, and other computer-implemented control applications, among others. Generally, the circuit arrangements and methods of the present invention are applicable wherever an ALU might be used. The various embodiments described above are provided by way of illustration only and should not be construed to limit the invention. Based on the above discussion and illustrations, those skilled in the art will readily recognize that various modifications and changes may be made to the present invention without strictly following the exemplary embodiments and applications illustrated and described herein. Such modifications and changes do not depart from the true spirit and scope of the present invention that is set forth in the following claims.

From a general point of new, the circuit arrangement for adding a first binary operand of N bits and a second binary operand of M bits, N being greater than or equal to M, comprises:

means for adding representative sets of least-significant bits of the first and second binary operands together to produce a least-significant bits partial sum and a carryout; and
means for outputting a most-significant bits partial sum by passing one of: a representative set of most-significant bits of the first binary operand, and an offset of the representative set of most-significant bits of the first binary operand, responsive to selection data, the selection data being a function of the most-significant bit of the representative set of least-significant bits of the first binary operand.

In a specific embodiment of the circuit arrangement, N equals M, the most-significant bit of the second binary operand is zero, and the multiplexer circuit is further configured to operate as an exclusive-or gate, the selection data being the most-significant bit of the first binary operand and a carryout from the adder.

The carryout is available from the adder before the least-significant bits partial sum.

In another specific embodiment of the circuit arrangement, the operands are unsigned binary numbers, and the multiplexer circuit is further configured to operate as an exclusive-or gate, the selection data being the most-significant bit of the first binary operand and a carryout from the adder.

In another specific embodiment of the circuit arrangement, the operands are unsigned binary numbers.

## Claims

1. A digital filter circuit arrangement (100) for carrying out a cascading series of binary arithmetic computations (EQN.A, .., EQN.D), which are integral to filtering operations, wherein:

    a first binary arithmetic computation (EQN. A) provides an M-bit intermediate result (310), and
    a second binary arithmetic computation (EQN. B) concatenates the M-bit intermediate result (310) with N-M more significant bits (334) having a value equal to the most significant bit (318) of the M-bit intermediate result (310) so as to obtain a sign-extended N-bit intermediate result (310, 334), and adds together the sign-extended N-bit intermediate result (310, 334) and an N-bit variable (332),

**characterized in that** the digital filter circuit arrangement comprises a computation circuit (400) for carrying out the second binary arithmetic computation (EQN.B), the computation circuit (400) comprising:

an adder adapted to add together representative sets of least-significant bits (0, .., 15) of the sign-extended N-bit intermediate result (310, 334) and the N-bit variable (332) to produce a least-significant bits partial sum and a carryout (C15); and
a multiplexer circuit (420) coupled to the adder and adapted to output a most significant bits partial sum (zoomn [23:16]) by passing one of : a representative set of most-significant bits (16, .., 23) of the N-bit variable (332), and an offset (-1, +1) of the representative set of most-significant bits (16, .., 23) of the N-bit variable (332), responsive to selection data (C 15, dzoomn[15]), the selection data being a function of the most-significant bit (15) of the representative set of least-significant bits (0, ..,15) of the sign-extended N-bit intermediate result (310, 334).

2. The digital filter circuit arrangement of claim 1, wherein the adder is an M-bit adder, the representative sets of least-significant bits (0, .., 15) of the sign-extended N-bit intermediate result (310, 334) and the N-bit variable (332) each have a length of M bits, and the selection data (C15, dzoomn[15]) includes a carryout (C15) from the M-bit adder, and the Mth bit (15) of the sign-extended N-bit intermediate result (310, 334).

3. The digital filter circuit arrangement of claim 2, wherein the most-significant bits partial sum is one of the N-M most significant bits ( 16, .., 23) of the N-bit variable (332), the N-M most significant bits (16, .., 23) of the N-bit variable (332) incremented by one, and the N-M most significant bits (16, .., 23) of the N-bit variable (332) decremented by one.

4. The digital filter circuit arrangement of claim 1, wherein the offset of the representative set of most-significant bits (16, .., 23) of the N-bit variable (332) include a first incremented offset ([23:16]+1), and a second decremented offset ([23:16]-1).

5. The digital filter circuit arrangement of claim 4, wherein the first incremented offset ([23:16]+1) is the representative set of most-significant bits (16, .., 23) of the N-bit variable (332) incremented by one, and the second decremented offset ([23:16]-1) is the representative set of most-significant bits (16, .., 23) of the N-bit variable (332) decremented by one.

6. The digital filter circuit arrangement of claim 1, wherein the selection data (C15, dzoomn[15]) includes the most-significant bit (15) of the representative set of least-significant bits (0, .., 15) of the sign-extended N-bit intermediate result (310, 334), and a carryout (C15) from the adder.

7. The digital filter circuit arrangement of claim 6, wherein the carryout (C 15) is available from the adder before the least-significant bits partial sum.

8. A method of digital filtering in a digital filter arrangement, comprising a series of binary arithmetic computation steps in cascade (EQN.A, .., EQN.D), which are integral to filtering operations, wherein:

a first binary arithmetic computation step (EQN.A) provides an M-bit intermediate result (310), and
a second binary arithmetic computation step (EQNB) concatenates the M-bit intermediate result (310) with N-M more significant bits (334) having a value equal to the most significant bit (318) of the M-bit intermediate result (310) so as to obtain a sign-extended N-bit intermediate result (310, 334), and adds together the sign-extended N-bit intermediate result (310, 334) and an N-bit variable (332),

**characterized in that** the second binary arithmetic computation step (EQN.B) comprises:

an adding sub-step performed by an adder, in which are added together representative sets of least-significant bits (0, .., 15) of the sign-extended N-bit intermediate result (310, 334) and the N-bit variable (332) to produce a least-significant bits partial sum and a carryout (C15); and
an outputting sub-step performed by a multiplexer, in which a most-significant bits partial sum (zoomn[23:16]) is outputted by passing one of : a representative set of most-significant bits (16, .., 23) of the N-bit variable (332), and an offset (-1, +1) of the representative set (16,.., 23) of most-significant bits of the N-bit variable (332), responsive to selection data (C15, dzoomn[15]), the selection data being a function of the most-significant bit (15) of the representative set of least-significant bits (0, .., 15)of the sign-extended N-bit intermediate result (310, 334).

**Patentansprüche**

1. Digitale Filterschaltungsanordnung (100) zum Ausführen einer kaskadenförmigen Folge von binären arithmetischen Berechnungen (EQN.A, ..., EQN.D), die Bestandteil von Filteroperationen sind, wobei
eine erste binäre arithmetische Berechnung (EQN.A) ein M-Bit-Zwischenergebnis (310) liefert, und
eine zweite arithmetische Berechnung (EQN.B) das M-Bit-Zwischenergebnis (310) mit N-M Bits mit höherer Wertigkeit (334) verkettet, die einen Wert aufweisen, der dem Bit mit der höchsten Wertigkeit (318) des M-Bit-Zwischenergebnisses (310) entspricht, so dass ein um ein Vorzeichen erweitertes N-Bit-Zwischenergebnis (310, 334) erzielt wird, und das um ein Vorzeichen erweiterte N-Bit-Zwischenergebnis (310, 334) und eine N-Bit-Variable (332) addiert, **dadurch gekennzeichnet, dass** die digitale Filterschaltungsanordnung eine Berechnungsschaltung (400) umfasst zum Ausführen der zweiten binären arithmetischen Berechnung (EQN.B), wobei die Berechnungsschaltung (400) Folgendes umfasst:

einen Addierer, der so ausgelegt ist, dass er repräsentative Sätze der Bits mit geringster Wertigkeit (0, ..., 15) des um ein Vorzeichen erweiterten N-Bit-Zwischenergebnisses (310, 334) und die N-Bit-Variable (332) addiert, um eine Teilsumme der Bits mit geringster Wertigkeit und einen Übertrag (C15) zu erzeugen; und
eine Multiplexerschaltung (420), die mit dem Addierer verbunden und so ausgelegt ist, dass sie eine Teilsumme der Bits mit höchster Wertigkeit (zoomn [23:16]) ausgibt, indem sie Folgendes weiterleitet: einen repräsentativen Satz der Bits mit höchster Wertigkeit (16,..., 23) der N-Bit-Variablen (332) oder einen Versatz (-1, +1) des repräsentativen Satzes der Bits mit höchster Wertigkeit (16, ..., 23) der N-Bit-Variablen (332) in Reaktion auf Auswahldaten (C 15, dzoomn[15]), wobei die Auswahldaten eine Funktion des Bits mit der höchsten Wertigkeit (15) des repräsentativen Satzes der Bits mit geringster Wertigkeit (0, ..., 15) des um ein Vorzeichen erweiterten N-Bit-Zwischenergebnisses (310, 334) sind.

2. Digitale Filterschaltungsanordnung nach Anspruch 1, wobei der Addierer ein M-Bit-Addierer ist, die repräsentativen Sätze der Bits mit geringster Wertigkeit (0, ... 15) des um ein Vorzeichen erweiterten N-Bit-Zwischenergebnisses (310, 334) und die N-Bit-Variable (332) jeweils eine Länge von M Bits aufweisen und die Auswahldaten (C15, dzoomn[15]) einen Übertrag (C15) vom M-Bit-Addierer und das M-te Bit (15) des um ein Vorzeichen erweiterten N-Bit-Zwischenergebnisses (310, 334) umfassen.

3. Digitale Filterschaltungsanordnung nach Anspruch 2, wobei die Teilsumme der Bits mit höchster Wertigkeit die N-M Bits mit höchster Wertigkeit (16, ..., 23) der N-Bit-Variablen (332) oder die N-M Bits mit höchster Wertigkeit (16, ..., 23) der N-Bit-Variablen (332) erhöht um Eins oder die N-M Bits mit höchster Wertigkeit (16, ..., 23) der N-Bit-Variablen (332) verringert um Eins sind.

4. Digitale Filterschaltungsanordnung nach Anspruch 1, wobei der Versatz des repräsentativen Satzes der Bits mit höchster Wertigkeit (16, ..., 23) der N-Bit-Variablen (332) einen ersten um Eins erhöhten Versatz ([23:16]+1) und einen zweiten um Eins verringerten Versatz ([23:16]-1) umfasst.

5. Digitale Filterschaltungsanordnung nach Anspruch 4, wobei der erste um Eins erhöhte Versatz ([23:16]+1) der repräsentative Satz der Bits mit höchster Wertigkeit (16, ..., 23) der N-Bit-Variablen (332) erhöht um Eins ist und der zweite um Eins verringerte Versatz ([23:16]-1) der repräsentative Satz der Bits mit höchster Wertigkeit (16, ..., 23) der N-Bit-Variablen (332) verringert um Eins ist.

6. Digitale Filterschaltungsanordnung nach Anspruch 1, wobei die Auswahldaten (C15, dzoomn[15]) das Bit mit höchster Wertigkeit (15) des repräsentativen Satzes der Bits mit geringster Wertigkeit (0, ..., 15) des um ein Vorzeichen erweiterten N-Bit-Zwischenergebnisses (310, 334) und ein Übertrag (C15) vom Addierer sind.

7. Digitale Filterschaltungsanordnung nach Anspruch 6, wobei der Übertrag (C15) vom Addierer vor der Teilsumme der Bits mit geringster Wertigkeit zur Verfügung steht.

8. Verfahren der digitalen Filterung in einer digitalen Filteranordnung, das eine kaskadenförmigen Folge von binären arithmetischen Berechnungsschritten (EQN.A, ..., EQN.D) umfasst, die Bestandteil von Filteroperationen sind, wobei ein erster binärer arithmetischer Berechnungsschritt (EQN.A) ein M-Bit-Zwischenergebnis (310) liefert, und ein zweiter binärer arithmetischer Berechnungsschritt (EQN.B) das M-Bit-Zwischenergebnis (310) mit N-M Bits mit höherer Wertigkeit (334) verkettet, deren Wert dem Bit mit höchster Wertigkeit (318) des M-Bit-Zwischenergebnisses (310) entspricht, um ein um ein Vorzeichen erweitertes N-Bit-Zwischenergebnis (310, 334) zu erzielen, und das um ein Vorzeichen erweiterte N-Bit-Zwischenergebnis (310, 334) und eine N-Bit-Variable (332) addiert, **dadurch gekennzeichnet, dass** der zweite binäre arithmetische Berechnungsschritt (EQN.B) Folgendes umfasst:

einen von einem Addierer durchgeführten Addierteilschritt, bei dem repräsentative Sätze der Bits mit geringster Wertigkeit (0, ..., 15) des um ein Vorzeichen erweiterten N-Bit-Zwischenergebnisses (310, 334) und die N-Bit-Variable (332) addiert werden, um eine Teilsumme der Bits mit geringster Wertigkeit und einen Übertrag (C15) zu erzeugen; und

einen von einem Multiplexer durchgeführten Ausgabeteilschritt, bei dem eine Teilsumme der Bits mit höchster Wertigkeit (zoomn[23:16]) ausgegeben wird, indem Folgendes weitergeleitet wird: ein repräsentativer Satz der Bits mit höchster Wertigkeit (16, ..., 23) der N-Bit-Variablen (332) oder ein Versatz (-1, +1) des repräsentativen Satzes der Bits mit höchster Wertigkeit (16, ..., 23) der N-Bit-Variablen (332) in Reaktion auf Auswahldaten (C15, dzoomn[15]), wobei die Auswahldaten eine Funktion des Bits mit der höchsten Wertigkeit (15) des repräsentativen Satzes der Bits mit geringster Wertigkeit (0, ..., 15) des um ein Vorzeichen erweiterten N-Bit-Zwischenergebnisses (310, 334) sind.

## Revendications

1. Configuration de circuit de filtrage numérique (100) pour effectuer une série en cascade de calculs arithmétiques binaires (EQN.A, ..., EQN.D), qui font partie intégrante d'opérations de filtrage, dans laquelle :

un premier calcul arithmétique binaire (EQN.A) fournit un résultat intermédiaire à M bits (310), et un second calcul arithmétique binaire (EQN.B) concatène le résultat intermédiaire à M bits (310) à N-M bits de poids fort (334) ayant une valeur égale au bit de poids le plus fort (318) du résultat intermédiaire à M bits (310) de façon à obtenir un résultat intermédiaire à N bits soumis à une extension de signe (310, 334), et additionne l'un à l'autre le résultat intermédiaire à N bits soumis à l'extension de signe (310, 334) et une variable à N bits (332),

**caractérisé en ce que** la configuration de circuit de filtrage numérique comprend un circuit de calcul (400) pour effectuer le second calcul arithmétique binaire (EQN.B), le circuit de calcul (400) comprenant :

un additionneur apte à additionner les uns aux autres des ensembles représentatifs de bits de poids le plus faible (0, ..., 15) du résultat intermédiaire à N bits soumis à l'extension de signe (310, 334) et la variable à N bits (332) pour produire une somme partielle de bits de poids le plus faible, et un report (C15); et un circuit multiplexeur (420) relié à l'additionneur et apte à délivrer en sortie une somme partielle de bits de poids le plus fort (zoomn[23:26]) en laissant passer l'un : d'un ensemble représentatif de bits de poids le plus fort (16, ..., 23) de la variable à N bits (332), et d'un décalage (-1, +1) de l'ensemble représentatif des bits de poids le plus fort (16, ..., 23) de la variable à N bits (332), en réponse à des données de sélection (C15, dzoomn [15]), les donnés de sélection étant fonction du bit de poids le plus fort (15) de l'ensemble représentatif de bits de poids le plus faible (0, ..., 15) du résultat intermédiaire à N bits soumis à l'extension de signe (310, 334).

2. Configuration de circuit de filtrage numérique selon la revendication 1, **caractérisée en ce que** l'additionneur est un additionneur à M bits, **en ce que** les ensembles représentatifs de bits de poids le plus faible (0, ..., 15) du résultat intermédiaire à N bits soumis à l'extension de signe (310, 334) et la variable à N bits (332) ont chacun une longueur de N bits, et **en ce que** les données de sélection (C15, dzoomn[15]) comprennent un report (C15) provenant de l'additionneur à M bits, et **en ce que** le M-ème bit (15) du résultat intermédiaire à N bits soumis à l'extension de signe (310, 334).

3. Configuration de circuit de filtrage numérique selon la revendication 2, **caractérisée en ce que** la somme partielle de bits de poids le plus fort est l'un des N-M bits de poids le plus fort (16, ...23) de la variable à N bits (332), des N-M bits de poids le plus fort (16, ..., 23) de la variable à N bits (332) incrémentée de 1, et des N-M bits de poids le plus fort (16, ..., 23) de la variable à N bits (332) décrémentée de 1.

4. Configuration de circuit de filtrage numérique selon la revendication 1, **caractérisée en ce que** le décalage de l'ensemble représentatif de bits de poids le plus fort (16,..., 23) de la variable à N bits (332) comprend un premier décalage incrémenté ([23:16]+1) et un second décalage décrémenté ([23:16]-1).

5. Configuration de circuit de filtrage numérique selon la revendication 4, **caractérisée en ce que** le premier décalage incrémenté ([23:16]+1) est l'ensemble représentatif de bits de poids le plus fort (16,..., 23) de la variable à N bits (332) incrémentée de 1 et le second décalage décrémenté ([23:16]-1) est l'ensemble représentatif de bits de poids le plus fort (16,..., 23) de la variable à N bits (332) décrémentée de 1.

6. Configuration de circuit de filtrage numérique selon la revendication 1, **caractérisée en ce que** les données de sélection (C15, dzoomn[15]) comprennent le bit de poids le plus fort (15) de l'ensemble représentatif de bits de poids le plus faible (0,... 15) du résultat intermédiaire à N bits soumis à l'extension de signe (310, 334), et un report (C15) provenant de l'additionneur.

7. Configuration de circuit de filtrage numérique selon la revendication 6, **caractérisée en ce que** le report (C15) est disponible sur l'additionneur avant la somme partielle de bits de poids le plus faible.

8. Procédé de filtrage numérique dans une configuration de filtrage numérique comprenant une série d'étapes de calculs arithmétiques binaires en cascade (EQN.A, ..., EQN.D) qui font partie intégrante d'opérations de filtrage, dans lequel :

une première étape de calcul arithmétique binaire (EQN.A) fournit un résultat intermédiaire à M bits (310), et une seconde étape de calcul arithmétique binaire (EQN.B) concatène le résultat intermédiaire à M bits (310) avec les N-M bits de poids plus fort (334) ayant une valeur égale au bit de poids le plus fort (318) du résultat intermédiaire à M bits (310) de façon à obtenir un résultat intermédiaire à N bits soumis à une extension de signe (310, 334), et additionne l'un à l'autre le résultat intermédiaire à N bits soumis à l'extension de signe (310, 334) et une variable à N bits (332),

**caractérisé en ce que** la seconde étape de calcul arithmétique binaire (EQN.B) comprend :

une sous-étape d'addition effectuée par un additionneur, lors de laquelle on additionne les uns aux autres des ensembles représentatifs de bits de poids le plus faible (0, ..., 15) du résultat intermédiaire à N bits soumis à l'extension de signe (310, 334) et la variable à N bits (332) pour produire une somme partielle de bits de poids le plus faible et un report (C15); et une sous-étape de fourniture en sortie effectuée par un multiplexeur, lors de laquelle une somme partielle de bits de poids le plus fort (zoomn[23:16]) est fournie en sortie en laissant passer l'un : d'un ensemble représentatif de bits de poids le plus fort (16, ..., 23) de la variable à N bits (332), et d'un décalage (-1, +1) de l'ensemble représentatif des bits de poids le plus fort (16, ..., 23) de la variable à N bits (332), en réponse à des données de sélection (C15, dzoomn[15]), les données de sélection étant fonction du bit de poids le plus fort (15) de l'ensemble représentatif de bits de poids le moins fort (0, ..., 15) du résultat intermédiaire à N bits soumis à l'extension de signe (310, 334).

FIG. 1

EP 1 446 713 B1

FILTER

200

FUNCTIONAL UNIT DATA PATH

220

| PANORAMIC MODE | |
|---|---|
| COMPRESSION | EXPANSION |

PIXEL (IN)  210

INITIALIZING INPUT VARIABLES  120

CLK  230

**POLYPHASE DIRECT MODE**

POS (0) = 0

POS (n + 1) = POS (n) + z(n + 1)

POS (0) = 0

POS (n + 1) = POS (n) + iz(n + 1)

**POLYPHASE TRANSPOSED MODE**

POS (0) = 0

POS (n + 1) = POS (n) + z(n + 1)

PIXEL (OUT)  240

# FIG. 2

FIG. 3

FIG. 4

POSITION$_{last}$[24] — 510

C23 — 520

POSITION$_{present}$[24]

500

505

**FIG. 5A**

550

8 x 1
MUX

560

"0"

"1"

0
1
2
3
4
5
6
7

S$_2$  S$_1$  S$_0$

568

OUTPUT
C19
(SEE BELOW)

566  564  562

POSITION$_{last}$[20]

ZOOM$_{present}$[20]

POSITION$_{present}$[20]

**FIG. 5B**

570

ZOOM$_{present}$[23:20]

584

586

590

INCREMENTOR

ZOOM$_{present}$[23:20] + 1

0

1

2 x 1
MUX

S$_0$

OUTPUT
SVAL [4:0]

580

582

C19
(FROM MUX ABOVE)

**FIG. 5C**